# EUROPÄISCHE PATENTANMELDUNG

(11) **EP 2 636 505 A1**
(43) Veröffentlichungstag der Anmeldung: **11.09.2013**
(21) Anmeldenummer: 13156677.0
(22) Anmeldetag: 26.02.2013
(51) Int. Cl.: B29C 49/06, B29C 49/42

(54) **Verfahren und Vorrichtung zur Herstellung eines Hohlkörpers**

(30) Priorität: 06.03.2012 DE 102012004622
(71) Anmelder: VERITAS AG, 63571 Gelnhausen (DE)
(72) Erfinder: Rösch, Thomas, 63589 Linsengericht-Großenhausen (DE)
(74) Vertreter: Klinski, Robert

(57) **Zusammenfassung**

Die Erfindung betrifft ein Verfahren zur Herstellung monolithischer Hohlkörper, wobei hierzu der Spritzguss und das Blasformen miteinander kombiniert werden. Weiterhin betrifft die Erfindung eine Vorrichtung zur Durchführung des Verfahrens.

## Beschreibung

Die Erfindung betrifft ein Verfahren zur Herstellung eines Hohlkörpers sowie eine Vorrichtung zur Durchführung des Verfahrens.

Im Fahrzeugbau werden Hohlkörper in Form von Schläuchen, Kanistern oder Tanks vorwiegend aus thermoplastischen Materialien gebildet, da diese nicht nur leicht, sondern sich auch einfach zu aufwendig gestalteten Hohlkörpern formen lassen. Bekannte Verfahren zur Herstellung solcher Hohlkörper sind der Spritzguss, das Blasformen oder auch das Extrusionsverfahren. Diese Formgebungsverfahren werden in Abhängigkeit der unterschiedlich zu erzielenden Geometrien eingesetzt. Somit lassen sich mit dem hochpräzisen Spritzgussverfahren komplexe Geometrien erstellen, wohingegen das Blasformverfahren kostengünstig ist und gute Entformungsmöglichkeiten aufweist.

Im Stand der Technik sind diese drei Verfahren gut eingeführt, wobei Schläuche oder Rohre bzw. Kanister oder Tanks vorzugsweise entweder mit dem einen oder anderen Verfahren hergestellt werden. Fluidleitungen werden beispielsweise im einfachsten Falle mit einem kontinuierlichen Verfahren wie dem Extrusionsverfahren hergestellt, wenn die Leitungen eine schlichte Form mit einem über die Länge im Wesentlichen konstanten Querschnitt aufweisen. Weist die Fluidleitung zudem mindestens einen Funktionsabschnitt auf, welcher der Fluidleitung eine über die normale Leitungsfunktion hinausgehende Funktion verleiht, so kann eine solche Fluidleitung mit den herkömmlichen Herstellungsverfahren nur unter großem Aufwand und nur mit unzureichender Genauigkeit gefertigt werden. Die Herstellungsverfahren werden vorzugsweise in Abhängigkeit der Geometrie der Bauteile gewählt.

Das Blasformen erlaubt einfach gestaltete Formen, die aber aufgrund der guten Entformungseigenschaften gekrümmt oder gebogen ausgeführt sein können, aber nur mit größeren Toleranzen herstellbar sind bzw. weniger Details aufweisen können. Solche Entformungseigenschaften weist der Spritzguss nicht auf, wobei sehr genaue Geometrien mit diesem Verfahren herstellbar sind.

Bei anspruchsvollen Geometrien sind im Stand der Technik auch kombinierte Hohlkörper beispielsweise in Form von Luftleitungen für den Fahrzeugbau bekannt, bei denen verschiedene Bauteile mit unterschiedlichen Umformverfahren hergestellt werden. So ist beispielsweise aus der JP 08 035 458 A2 eine Luftleitung für einen Motor mit einer Innenschicht bekannt, die im Blasformverfahren hergestellt ist. Eine Außenschicht der Luftleitung ist indes als integrales Teil in einem Spritzgussverfahren hergestellt.

Ein ähnlicher Aufbau ist auch aus der JP 05 215 025 A2 bekannt, in der eine Luftansaugleitung mit einer im Blasformverfahren hergestellten Innenleitung dargestellt ist mit einer im Spritzgussverfahren an einem äußeren Umfang der inneren Leitung angeformten Hülle.

Ferner sind Verfahren bekannt, bei denen Bauteile spritzgegossen und später einem Blasformen unterzogen werden. Bei diesen Verfahren muss der Hohlkörper nach dem Blasformen jedoch noch nachbearbeitet werden, was zeit- und kostenintensiv ist, wenn man beispielsweise Hohlkörper mit zwei Öffnungen herstellen will.

In Anbetracht der durch den Stand der Technik zur Verfügung stehenden Möglichkeiten liegt der Erfindung die Aufgabe zugrunde, die eingangs genannten Verfahren zur Herstellung eines Hohlkörpers weiter zu entwickeln, um derartige Hohlkörper einfach und kostengünstig herstellen zu können.

Ein Verfahren zur Lösung der erfinderischen Aufgabe weist die Merkmale des unabhängigen Anspruchs 1 auf. Danach wird ein Verfahren zur Herstellung eines monolitischen Hohlkörpers, vorzugsweise eines Rohres oder Schlauches, beansprucht, umfassend die Verfahrensschritte des Spritzgießens und des Blasformens, wobei ein Formling mit zumindest einem Funktionsabschnitt im Spritzgussverfahren hergestellt und im Blasformverfahren weiter bearbeitet wird, und wobei in dem Formling durch das Spritzgussverfahren zumindest ein Durchgang gebildet wird mit Öffnungen und zumindest eine der Öffnungen an wenigstens einem der Enden des Formlings und/oder dem zumindest einen Funktionsabschnitt angeordnet ist.

Das erfindungsgemäße Verfahren schafft schon im Spritzgussverfahren die Voraussetzung einer einfachen Weiterverarbeitung im Blasformverfahren und vermeidet somit die Nachbearbeitung des Bauteils nach dem Ausformen. Dieses erspart Zeit und Kosten.

Gemäß einem besonders bevorzugten Ausführungsbeispiel der Erfindung kann der Formling mit den Öffnungen zumindest teilweise blasgeformt werden. Dadurch ist man mit dem erfindungsgemäßen Verfahren erstmals in der Lage einen wenigstens zweifach offenen Hohlkörper im Blasformverfahren zu formen.

Nach einer Weiterbildung können die Funktionsabschnitte durch das Spritzgussverfahren endgeformt werden und vorzugsweise im Bereich der Enden des Formlings angeordnet werden. Die beiden Verfahren werden dahingehend eingesetzt, dass insbesondere die jeweiligen Vorzüge ausgenutzt werden. So werden die Teile vornehmlich spritzgegossen, die einer hohen Präzision bedürfen und andere Teile, die mit dem Blasformverfahren besser geformt werden, vornehmlich blasgeformt, wobei die letztgenannten vorher auch im Spritzguss vorgeformt werden.

Gemäß einer Weiterbildung können die Öffnungen im Bereich der Funktionsabschnitte angeordnet sein, insbesondere die Funktionsabschnitte die Öffnungen umgeben. Damit weisen die Öffnungen eine definierte Struktur auf, wodurch der Hohlkörper einfacher blasgeformt und in einem fertig hergestellten Zustand funktional mit anderen Bauteilen besser verbunden werden kann.

Nach einer anderen Ausführungsform der Erfindung kann ein hohler Abschnitt zwischen den endseitigen Funktionsabschnitten durch das Spritzgießen geformt werden, wobei der hohle Abschnitt zumindest teilweise den Durchgang umgibt und eine im Wesentlichen längliche gerade Struktur aufweist. Durch das Spritzgiessen lassen sich nahezu beliebige Formen herstellen, so dass bei der vorliegenden Erfindung insbesondere ein Abschnitt nur als Formling hergestellt werden kann, der anschließend noch einem Blasformschritt unterzogen wird.

Deshalb ist es vorteilhaft vorgesehen, wenn der hohle Abschnitt mit dem Durchgang wenigstens teilweise blasgeformt wird. Hierdurch können die guten Entformungseigenschaften des Blasformens voll ausgenutzt werden.

Gemäß einer weiteren Ausführungsform kann der hohle Abschnitt nach dem Blasformverfahren eine dreidimensionale Struktur aufweisen, insbesondere der hohle Abschnitt eine längliche gekrümmte Struktur. Mit dem erfinderischen Verfahren lassen sich somit einfach auch gekrümmte Rohre oder Schläuche herstellen. Die dreidimensionale Struktur bezieht sich nicht nur auf die Ausformung eines Hohlkörpers, sondern auch die Form im Raum. Damit sind also nicht nur gerade Schläuche und Rohre gemeint, sondern auch einfach oder mehrfach gekrümmte Hohlkörper.

Bevorzugt kann der Formling beim Blasformen an den Funktionsabschnitten gehalten werden, wobei vorzugweise die Funktionsabschnitte in eine Aufnahme außerhalb einer Blasformkavität eingespannt werden. Die Funktionsabschnitte können aufgrund ihrer komplexen Geometrie nur spritzgegossen werden und können dadurch beim Blasformen auch als Halteabschnitte dienen.

Nach einer Weiterbildung der Erfindung, kann Blasluft in den Formling durch eine Öffnung eingebracht werden, während weitere Öffnungen (12) abgedichtet sind. Damit lässt sich der Formling leicht in einer gewünschte Endform bringen, wobei die entsprechenden Öffnungen entweder mit einer aufnehmenden Kavität oder einem dafür vorgesehenen Verschlussmittel abgedichtet werden.

Weiterhin kann vorgesehen sein, die Blasluft in der Formling durch mehr als eine Öffnungen einzubringen. Damit können auch in ihrer Geometrie komplex gestaltete Formlinge leicht blasgeformt werden, da man mit mehr als einer Blasluftöffnung besser alle auszuformenden Bereiche des Formlings erreicht. Zudem kann ein Blasluftdruck auch geringer gewählt werden, was eine bessere Formung des Hohlkörpers erlaubt.

Nach einer weiteren vorteilhaften Ausgestaltung der Erfindung kann das Einbringen der Blasluft in den Formling durch mehr als eine Öffnung in einer zeitlichen Abfolge erfolgen, insbesondere Blasluft durch eine erste Öffnung eingebracht werden und zeitlich versetzt die Blasluft sukzessive in weitere Öffnungen eingebracht werden. Damit können unterschiedliche Bereiche nach einander ausgeformt werden, womit sich weitere Vorteile bei der Herstellung des Hohlkörpers ergeben können.

Weiterhin kann vorteilhaft vorgesehen sein, die Funktionsabschnitte nach dem Spritzgießen zu erhalten, insbesondere nicht durch das Blasformen weiter umzuformen. Die komplexen Funktionsabschnitte sind bereits nach dem Spritzgießen ausgeformt und können somit vom Blasformen ausgenommen werden.

Nach einer weiteren Ausführungsform können die Enden, insbesondere die Funktionsabschnitte an den Enden, nach dem Blasformen erhalten bleiben. Da vornehmlich ein zwischen den Funktionsabschnitten bzw. den Enden gelegener Bereich des Hohlkörpers blasgeformt wird, sind die Enden bereits nach dem Spritzguss endgeformt und bedürfen keiner weiteren Bearbeitung. Somit bleiben die Enden auch nach dem Blasformen erhalten, was Zeit und Kosten spart.

Ebenso können vorteilhaft mit dem Spritzgussverfahren weitere Funktionsabschnitte an dem Formling angeformt werden, wobei vorzugsweise die weiteren Funktionsabschnitte im Bereich des hohlen Abschnitts zwischen den beiden Enden angeformt werden. Alternativ zu den Formlingen mit zwei als Funktionsabschnitte ausgebildeten Enden, können noch weitere Funktionsabschnitte auf dem Schlauch oder Rohr vorgesehen sein. Diese Funktionsabschnitte können beispielsweise als Halte- oder Kupplungseinrichtung ausgebildet sein. Diese können dazu dienen, dass der Formling beim Spritzgussverfahren zum Blasformverfahren im Bereich der weiteren Funktionsabschnitte gehalten wird. Damit kann der Formling leicht beim Wechsel von einer Kavität zur nächsten manipuliert werden.

Weiterhin können in vorteilhafter Weise mit dem Spritzgussverfahren weitere Öffnungen in den Formling eingebracht werden. Die Öffnungen können als Funktionsabschnitte ausgebildet sein und in dem späteren Blasformverfahren als Halteabschnitte eingesetzt werden, mit denen der Rohling beim Umlagern in die Blasform-Kavität manipuliert werden kann.

Zur Herstellung des Hohlkörpers kann nach einem weiteren Ausführungsbeispiel wenigstens eine Kavität verwendet werden, in der der Formling gespritzt und/oder blasgeformt wird. Es kann sich nämlich als vorteilhaft erweisen, die beiden Verfahrensschritte auch räumlich zusammenzulegen, so dass mit nur einem Werkzeug beide Verfahren durchgeführt werden können. Dieses bringt sowohl Kosten- als auch Zeitvorteile.

Hierbei kann es vorteilhaft vorgesehen sein, dass der Formling relativ zu den Kavitäten bewegt wird oder die Kavitäten relativ zum Formling. Bei einer Bewegung des Formlings relativ zu den Kavitäten, wird der Formling aktiv von einer Kavität zu einer anderen transportiert. Bei einer Bewegung der Kavitäten relativ zum Formling, sind ebenfalls zwei unterschiedliche Kavitäten vorhanden, wobei hierbei aber der Formling fixiert ist, dieser also in einer vorgegebenen Position verbleibt, und die Kavitäten bewegt werden.

Nach einem weiteren Beispiel der Erfindung kann der Formling nach dem Spritzguss in der Kavität verbleiben und blasgeformt werden. Anders als in dem vorstehend beschriebenen Ausführungsbeispiel kann auch eine Kavität für beide Verfahren vorgesehen sein, in der nämlich der Spritzguss und das Blasformen ausgeführt werden. Hierbei ist es möglich, die Kavität derart zu gestalten, dass Teile des zu verarbeitenden Materials spritzgegossen und andere blasgeformt werden.

In bevorzugten Ausführungsformen der Erfindung kann der Hohlkörper ein Rohr, Schlauch, Faltenbalg, eine Fluidleitung oder dergleichen sein.

Weiterhin wird die Aufgabe durch eine Vorrichtung zur Durchführung des Verfahrens mit den Merkmalen des unabhängigen Anspruchs 17 gelöst.

Gemäß einer Ausbildung der vorliegenden Erfindung kann die Umformeinrichtung wenigstens eine Kavität zum Spritzguss und/oder Blasformen aufweisen, wobei in der Kavität zum Blasformen ein Hohlkörper mit zwei Öffnungen blasformbar ist. Das Werkzeug weist somit alle Mittel zum Spritzgießen und Blasformen auf, die das Durchführen beider Verfahren erlauben. Insbesondere eine Kavität zum Blasformen bedarf Mittel, mit denen ein Hohlkörper mit zwei Öffnungen herstellbar ist. Dabei kann die Kavität zwei Halteeinrichtungen aufweisen, in denen die Funktionsabschnitte mit den Öffnungen gehalten werden.

Weitere vorteilhafte Ausführungsbeispiele sind Gegenstand der Unteransprüche.

Ein Ausführungsbeispiel wird nachfolgend anhand der Zeichnung näherer erläutert. Darin zeigen:
- Fig. 1: einen Verfahrensschritt eines spritzgegossenen Formlings zu einem blasgeformten Hohlkörper,
- Fig. 2: ein Ausführungsbeispiel eines Formlings nach dem Spritzgiessen,
- Fig. 3: ein Ausführungsbeispiel eines Formlings nach dem Spritzgiessen mit seitlich angeordneten Funktionszonen,
- Fig. 4: ein Formling in einer Blasform mit seitlichen Funktionszonen und Öffnungen,
- Fig. 5: ein Hohlkörper mit seitlichen Funktionszonen und Öffnungen,
- Fig. 6: ein alternativer Formling mit seitlichen Funktionszonen und Öffnungen,
- Fig. 7: ein Formling gemäß Fig. 6 in einer Blasform, und
- Fig. 8: ein alternativer Hohlkörper nach dem Blasformen.

Das Verfahren zur Herstellung eines Hohlkörpers 10 weist nach einem Ausführungsbeispiel der Erfindung die folgenden Verfahrensschritte auf:
- Bereitstellen eines thermoplastischen Materials,
- Spritzgießen eines Formlings, welcher zwei Funktionsabschnitte 11 mit definierter Geometrie- und Formabschnitt umfasst,
- Überführen des Formlings von einer Spritzgusskavität in eine Blasformkavität,
- Kühlen der Funktionsabschnitte 11 und Erwärmen bzw. Isolieren des Formabschnitts,
- Blasformen der Formabschnitte.

Hauptaugenmerk der Erfindung ist das vereinfachte Ausformen von Rohren oder Schläuchen durch Biegen während des Blasformens. Dabei wird in einem ersten Schritt ein entsprechendes Material, insbesondere ein thermoplastisches Material in eine entsprechende Form, vorzugsweise Kavität, eingebracht, die mittels Spritzgussverfahrens zu einem Formling geformt wird. In einem zweiten Schritt wird das herzustellende Rohr dann in eine Blasform eingelegt, um dort endgeformt zu werden. Auf diese Weise werden wesentliche Merkmale der beiden Fertigungsverfahren miteinander kombiniert. Der durch das Spritzgießen hergestellte Formling weist noch einen relativ geringen Querschnitt auf, wodurch sich der Formling leichter biegen lässt. Erst in einem nachfolgenden Schritt wird der Formling dann auf seinen endgültigen Querschnitt aufgeblasen.

Bei dem Ausführungsbeispiel wird nach dem Spritzguss der Formling von der Spritzgusskavität zu einer Blasformkavität überführt, wo der Formling endgeformt wird. Der Formling weist nach dem Spritzgussverfahren bereits eine definitierte Geometrie mit Form- oder Funktionsabschnitten 11 auf. Die Formabschnitte können auf spätere Ausformungen des Blasformverfahrens hinweisen.

Das beschriebene Verfahren ist ein sequentielles Verfahren, bei dem der Spritzguss dem Blasformen vorgelagert ist bzw. bei dem ein "Vorformling" im Spritzguss hergestellt und im durch Blasformen anschließend endgeformt wird.

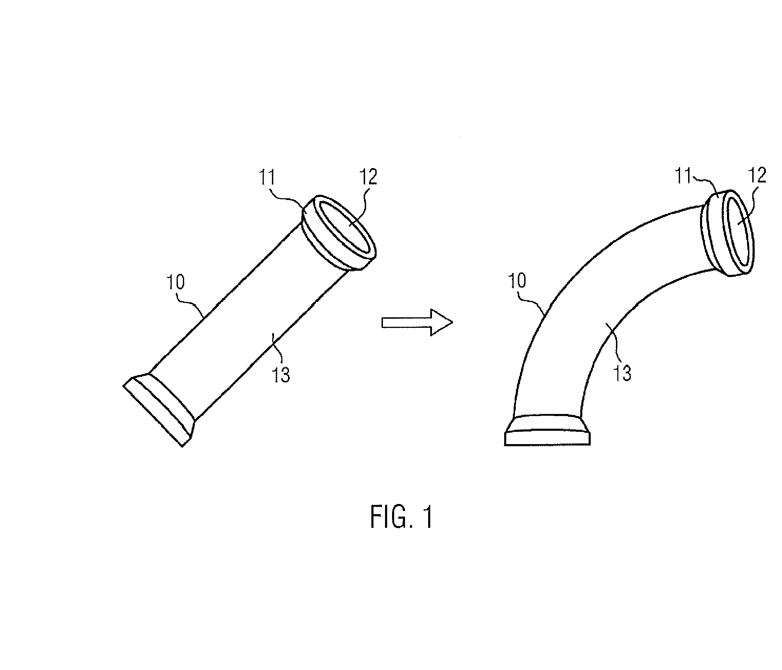

In der Fig. 1 ist die Verfahrensabfolge des Herstellungsverfahrens gezeigt, wobei jeweils der Hohlkörper 10 nach dem jeweiligen Herstellungsschritt gezeigt ist. Das in der Figur links dargestellte Bauteil ist der Hohlkörper 10 als Formling nach dem Spritzgiessen. Es weist einen hohlen Mittelabschnitt 13 auf mit einem an den jeweiligen Enden angeordneten Funktionsabschnitt 11, der auch jeweils eine Öffnung 12 aufweist. Die Funktionsabschnitte 11 können beliebig ausgeformt sein, je nach Einsatzfunktion des Hohlkörpers 10. Es können ein oder mehrere Funktionsabschnitte vorgesehen sein, bevorzugt zumindest zwei Funktionsabschnitte.

Das in der Figur rechts dargestellte Bauteil zeigt einen Hohlkörper 10 nach dem Blasformen. Die Funktionsabschnitte 11 sind unverändert geblieben, nur der hohle Abschnitt 13 dazwischen weist nun eine gekrümmte Form auf. Aufgrund der guten Entformungseigenschaften, also dem Lösen des Bauteils aus der Form, können einfach oder auch mehrfach gekrümmte bzw. gebogene Hohlkörper 10 mit dem Blasformen hergestellt werden. Diese wäre mit dem Spritzguss nur unter erschwerten Bedingungen möglich. Solche gekrümmten Bauformen werden auch als dreidimensionale Bauformen bezeichnet, da das Bauteil im Raum alle drei Dimensionen berührt.

Die Funktionsabschnitte 11 werden bereits durch das Spritzgussverfahren endgeformt und bleiben deshalb beim Blasformen unverändert erhalten. Somit können die Funktionsabschnitte 11 auch als Halteabschnitte beim Herstellen des Hohlkörpers 10 eingesetzt werden, zumindest während des Blasformens. Hierzu werden die Funktionsabschnitte 11 gekühlt. Der restliche Körper des Formlings, welcher weiterbearbeitet wird, kann entweder direkt blasgeformt werden mit der im Spritzguss erzeugten Wärme oder blasgeformt werden mit einer vorherigen und/oder gleichzeitigen Erwärmung.

Die Funktionsabschnitte 11 werden bevorzugt außerhalb einer Blasformkavität angeordnet, wodurch sie nicht dem eigentlichen Blasformverfahren unterzogen werden. Die Kavität ist entsprechend ausgestaltet, insbesondere weist sie Ausnehmungen bzw. Abschnitte auf, durch die bzw. in die die Funktionsabschnitte 11 ragen.

Nach dem Blasformen müssen die Enden nicht endbehandelt werden. Es muss vor allem keine zweite Öffnung 12 in den Formling geschnitten werden, damit es als Rohr oder Schlauch bzw. Leitung eingesetzt werden kann. Die Grundform eines durchgängigen Hohlkörpers 10 mit zwei Öffnungen 12 weist der Formling nämlich schon nach dem Spritzguss auf, weshalb die Enden, die in die Funktionsabschnitte 11 integriert sind, nicht mehr blasgeformt und zudem auch nicht endbehandelt werden müssen, womit insbesondere das Herstellen einer zweiten Öffnung 12 gemeint ist.

Der Formling wird an den Funktionsabschnitten 11 durch eine entsprechende Vorrichtung gehalten. In diese sogenannten Halteeinrichtungen werden die Funktionsabschnitte 11 eingespannt, so dass der Formling während des Blasformens sicher gehalten ist. Dabei wird gleichzeitig der Formling an den entsprechenden Abschnitten gekühlt oder gewärmt. Insbesondere im Bereich der Abschnitte, an denen der Formling gehalten wird, wird der Formling gekühlt. In den Abschnitten 13, die in der Blasform weiter verarbeitet werden, kann der Formling gewärmt werden, damit es zum Blasformen eine entsprechende Temperatur aufweist. Auf das Wärmen kann auch verzichtet werden, wenn nämlich, wie oben bereits beschrieben, die Wärme in dem Formling, die durch das Spritzgießen erzeugt wurde, ausreicht, den Formling noch blaszuformen. Das Verfahren zeichnet sich ferner durch die Führung des Formlings aus. Es ist vorgesehen, entweder das Werkstück relativ zu zwei Kavitäten zu bewegen, also von einer feststehenden Kavität zu einer anderen Kavität zu überführen, wo der Formling weiterbearbeitet wird. Andererseits können auch die Kavitäten relativ zum Formling bewegt werden, wobei dann der spritzgegossene Formling in einer Position gehalten wird und eine Blasformkavität zu dem Formling hingeführt und gleichzeitig die Spritzgusskavität weggeführt wird. Es kann also in der letztgenannten Ausführungsform auch der Formling in einer definierten Lage gehalten und die Kavitäten ausgetauscht werden. Dabei gibt es keinen Transfer des Formlings, sondern eine relative Bewegung der Kavitäten zum Formling.

Es ist zudem vorgesehen, den Wechsel von Spritzgusskavität zu Blasformkavität möglichst zeitlich kurz zu halten, damit die Wärme in dem Formling erhalten bleibt. In Anbetracht komplexer Geometrien und auch des eingesetzten Materials mögen die Wechselzeiten aber nicht ausreichen, die Wärme in dem Formling aufrecht zu erhalten. In einem solchen Fall wird zusätzlich Wärme in den Formling eingebracht.

Zur Herstellung des oben stehenden beschriebenen Verfahrens ist eine Vorrichtung vorgesehen, die eine Umformeinrichtung aufweist, mit der das beschriebene Verfahren durchführbar ist. Dafür ist wenigstens eine Kavität vorgesehen, in der ein Rohr, Schlauch, Kanister, Tank oder dergleichen Hohlkörper 10 geformt werden kann. Da die beiden beschriebenen Verfahren unterschiedliche Bedingungen an die Werkzeugkonstruktion stellen, ist ein Werkzeug zur Ausführung beider Verfahren komplex ausgestaltet. Neben den Merkmalen zum Spritzgießen sind die Merkmale zum Blasformen auch in dem Werkzeug enthalten. Alternativ hierzu ist auch eine Werkzeugeinrichtung vorgesehen, bei der zwei bewegliche Kavitäten vorgesehen sind, die eine für das Spritzgussverfahren, und die andere für das Blasformverfahren. Bei dieser Ausführungsform wird der Formling in einer definierten Position durch eine Halteeinrichtung gehalten und die jeweiligen Kavitäten vom Formling weggeführt bzw. zum Formling hingeführt. Mit anderen Worten bewegen sich die Kavitäten relativ zum Formling. In diesem Ausführungsbeispiel sind ebenso Kühl- und Wärmeeinrichtungen vorgesehen.

Hohlkörper 10, die sich durch das vorstehend beschriebene Verfahren und die Vorrichtung verwirklich lassen, sind vor allem Hohlkörper 10 für den Fahrzeugbau. Dazu gehören vorzugweise aber nicht ausschließlich jegliche Art von Luft- und Fluidleitungen aber auch Kanister oder Tanks. Ebenso lassen sich auch jegliche andere Hohlkörper 10 wie Schläuche oder Rohre und Abdeckungen oder Formteile sowie gewichtsreduzierende Strukturbauteile herstellen. Durch das beschriebene Verfahren lassen sich solche Hohlkörper 10 an Motorgeometrien anpassen, da im Fahrzeugbau der Platz knapp bemessen ist und somit die Hohlkörper 10 sich gut in freie Abschnitte anpassen lassen.

Mit dem vorstehend beschriebenen Verfahren können auch Formlinge durch das Spritzgiessen hergestellt, die nicht gerade sind. Es ist jede Geometrie denkbar, die der Endform des herzustellenden Hohlkörpers nahekommt, wodurch die Prozessschritte erleichtert werden. Insbesondere kann durch die angepasste Geometrie das Manipulieren bzw. Handling sowie das Blasformen insgesamt erleichtert werden. So können beispielsweise auch winkelige Formlinge mit spitzen oder stumpfen Winkel spritzgegossen werden, die in dem weiteren Bearbeitungsprozess endgeblasen werden. In der Praxis wäre ein V-förmiger Formling zur Herstellung eines U-förmigen Hohlkörpers geeigneter, als ein gerader Formling, da die Umformung geringer wäre.

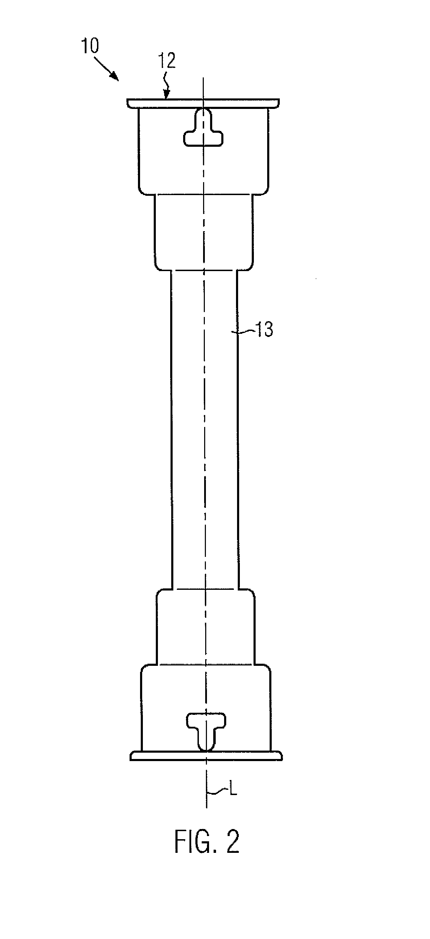

In der Fig. 2 ist ein Formling gezeigt, der jeweils an einem oberen und unteren Ende zwei Funktionsabschnitte 11 aufweist, in den eine Öffnung angeordnet 12 ist. Der Formling weist keine seitlichen Funktionsabschnitte auf, so dass der hohle Mittelabschnitt 13 lediglich zwei Öffnungen 12 aufweist.

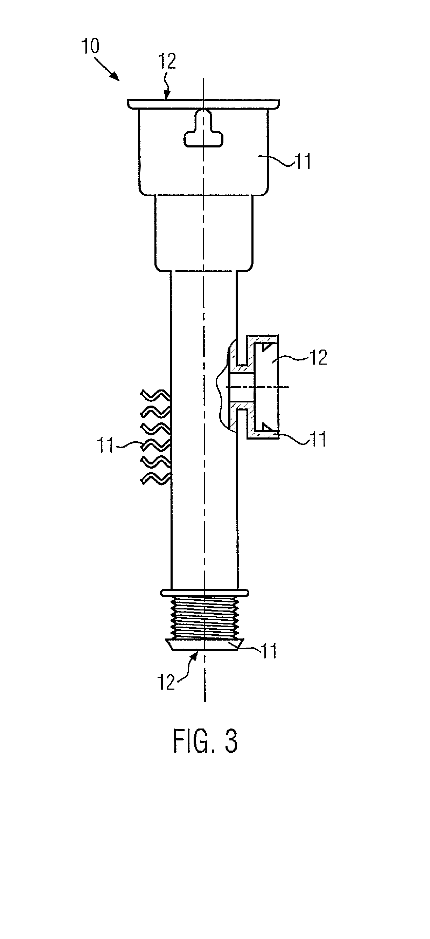

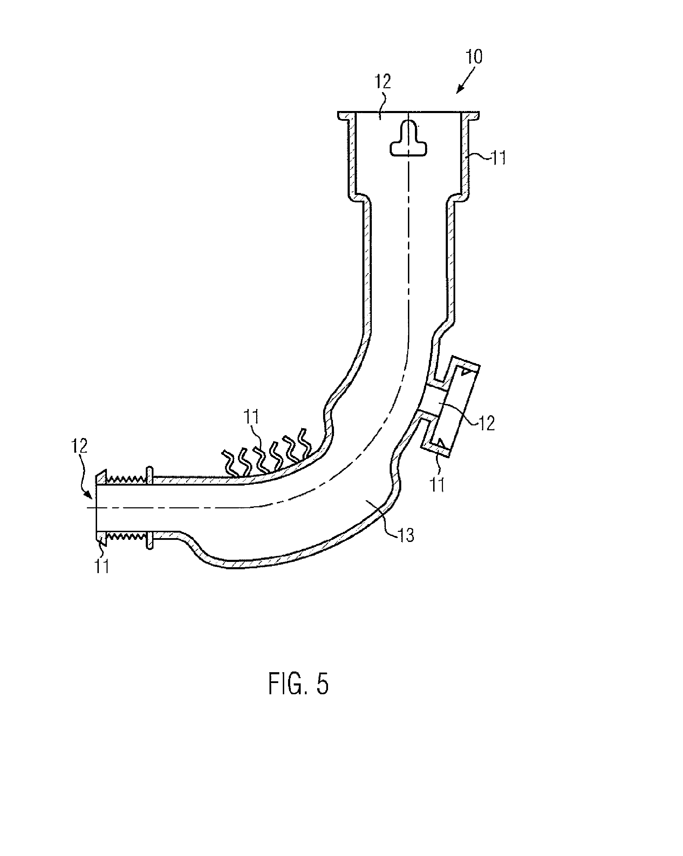

In den Fig. 3 bis 5 ist ebenfalls eine Abfolge des Herstellungsverfahrens anhand des Hohlkörpers 10 dargestellt. Darin weist der Hohlkörper 10 mehrere auch seitliche Funktionsabschnitte 11 auf. Aus den Figuren wird ersichtlich, dass bereits nach dem Spritzgiessen die Funktionsabschnitte schon ausgebildet sind und fast ausschließlich der Mittelabschnitt einer weiteren Verformung bedarf. Im Blasformschritt wird der Mittelabschnitt 13 endgeformt und insbesondere weiter hinsichtlich einer Längserstreckung gebogen.

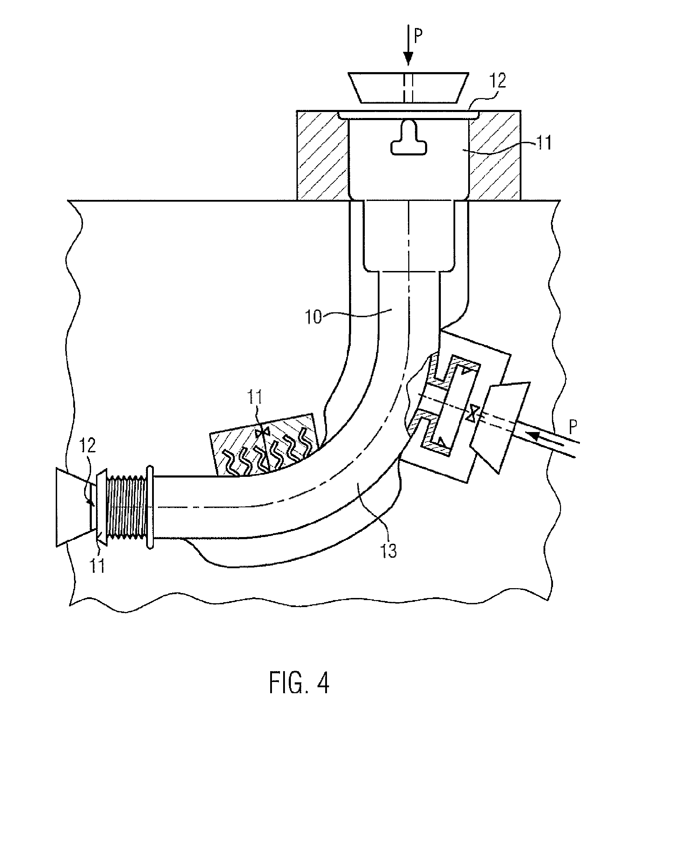

Eine Ausgangsform ist nämlich in Fig. 3 dargestellt, in der der Formling eine gerade Form aufweist mit den bereits ausgeformten Funktionsabschnitten 11. Erst in der Blasform wird der Hohlkörper 10 gekrümmt aufgeblasen, wobei im Bereich der Funktionsabschnitte, insbesondere an diesen selbst, gehalten wird. Dieses ist in Fig. 4 ersichtlich, in der die Blasform Ausnehmungen für die Funktionsabschnitte aufweist.

Beim Blasformen sind die jeweiligen Öffnungen 12 derart abgedichtet, dass Blasluft, die durch wenigstens eine der Öffnungen 12 eingeblasen wird nicht austreten kann. In der Fig. 4 wird durch eine obere Öffnungen 12 die Blasluft in den Hohlkörper 10 eingeblasen, wobei durch die Kavität die seitliche Öffnung 12 in dem Funktionsabschnitt 11 geschlossen ist. Es ist auch ersichtlich, dass die Manipulation durch die bereits ausgeformten Funktionsabschnitte 11 erleichtert wird gegenüber Herstellungsverfahren, in denen die Funktionsabschnitte 11 erst durch das Blasformen hergestellt werden müssen.

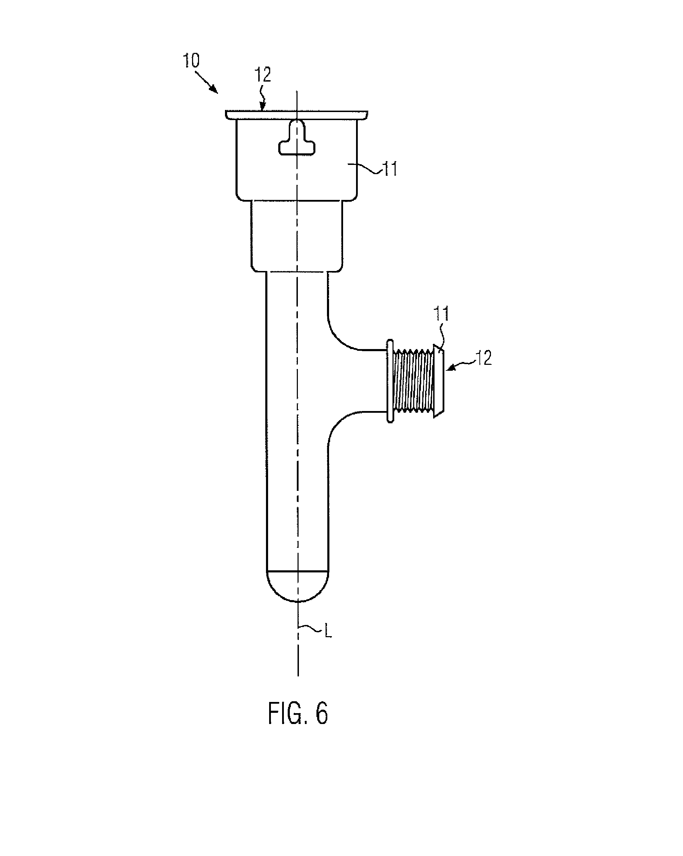

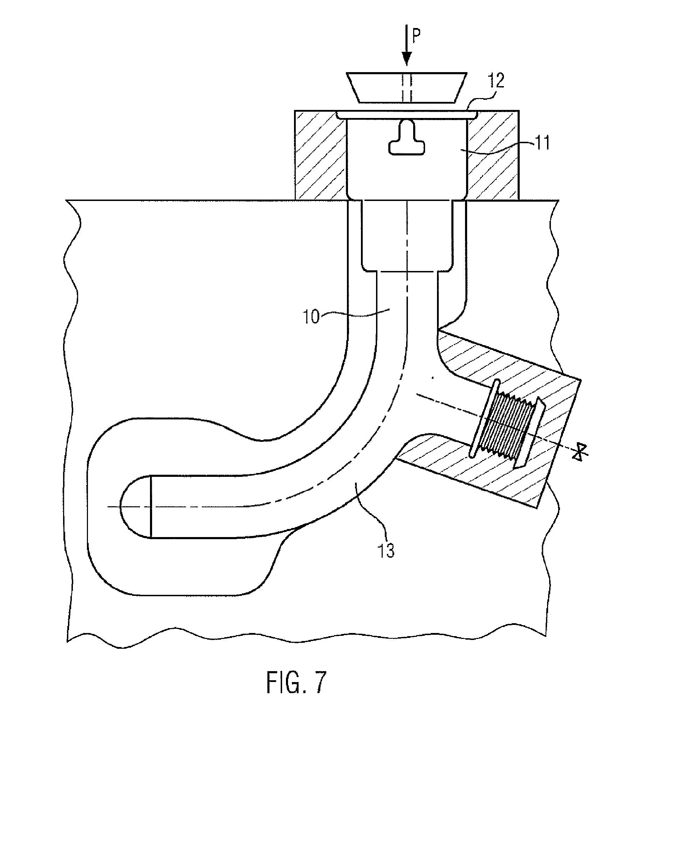

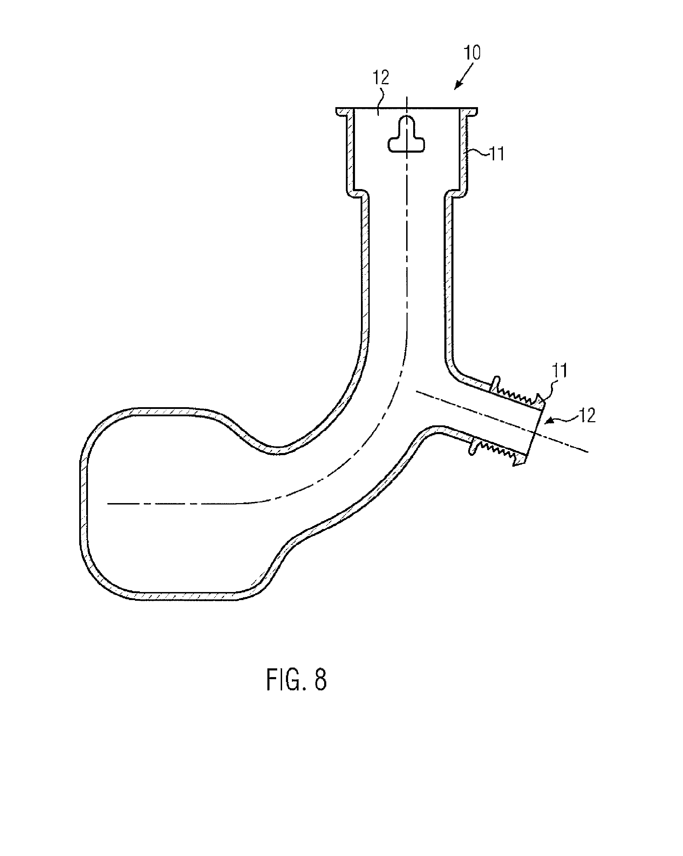

In den Fig. 6 bis 8 ist eine alternative Ausführungsform eine Hohlkörpers 10 dargestellt. Danach weist der Hohlkörper 10 nicht nur zwei Enden auf, sondern im Wesentlich drei. Zwei der Enden sind mit einem Funktionsabschnitt 11 und einer entsprechenden Öffnungen 12 versehen, wohingegen das dritte Ende geschlossen ist und keinen Funktionsabschnitt 11 aufweist. Der in der Fig. 6 dargestellte Formling wird wie die anderen Formlinge krumm geblasen, wobei das tote bzw. geschlossene Ende geweitet wird, wie es beispielsweise bei Resonatoren üblich ist.

Es kann auch bei dieser alternativen Ausführungsform, wie auch bei den anderen Ausführungsbeispielen, der Formling über zwei Öffnungen 12 mit Blasluft versorgt werden, wodurch an zwei Funktionsabschnitten bzw. Öffnungen Luft in den Hohlkörper 10 geblasen wird. Weitere, also drei und mehr, Öffnungen sind ebenfalls denkbar, wobei ein Blasformwerkzeug auch entsprechend viel Blasluftvorrichtungen bzw. Halteeinrichtungen aufweist, um entsprechende Formlinge endzuformen.

## Patentansprüche

1. Verfahren zur Herstellung eines monolithischen Hohlkörpers (10), vorzugsweise eines Rohres oder Schlauches, umfassend die Verfahrensschritte des Spritzgießens und des Blasformens, wobei ein Formling mit zumindest einem Funktionsabschnitt (11) im Spritzgussverfahren hergestellt und im Blasformverfahren weiter bearbeitet wird und der Formling zumindest zwei Enden aufweist, **dadurch gekennzeichnet, dass** in dem Formling durch das Spritzgussverfahren zumindest ein Durchgang gebildet wird mit Öffnungen (12), und zumindest eine der Öffnungen an wenigstens einem der Enden des Formlings und/oder dem zumindest einen Funktionsabschnitt angeordnet ist.

2. Verfahren nach Anspruch 1, **dadurch gekennzeichnet, dass** der Formling mit den Öffnungen (12) zumindest teilweise blasgeformt wird.

3. Verfahren nach Anspruch 1 oder 2, **dadurch gekennzeichnet, dass** die Funktionsabschnitte (11) durch das Spritzgussverfahren endgeformt werden und vorzugsweise im Bereich der Enden des Formlings angeordnet werden, wobei insbesondere die Öffnungen (12) im Bereich der Funktionsabschnitte (11) angeordnet sind, insbesondere die Funktionsabschnitte (11) die Öffnungen (12) umgeben.

4. Verfahren nach wenigstens einem der vorstehenden Ansprüche, **dadurch gekennzeichnet, dass** ein hohler Abschnitt (13) zwischen den endseitigen Funktionsabschnitten (11) durch das Spritzgießen geformt wird, wobei insbesondere der hohle Abschnitt (13) zumindest teilweise den Durchgang umgibt und eine im Wesentlichen längliche gerade Struktur aufweist.

5. Verfahren nach wenigstens einem der vorstehenden Ansprüche, **dadurch gekennzeichnet, dass** der hohle Abschnitt (13) mit dem Durchgang wenigstens teilweise blasgeformt wird, wobei vorzugsweise der hohle Abschnitt (13) nach dem Blasformverfahren eine dreidimensionale Struktur aufweist, insbesondere der hohle Abschnitt eine längliche gekrümmte Struktur.

6. Verfahren nach wenigstens einem der vorstehenden Ansprüche, **dadurch gekennzeichnet, dass** der Formling beim Blasformen an den Funktionsabschnitten gehalten wird, wobei vorzugsweise die Funktionsabschnitte (11) in eine Aufnahme außerhalb einer Blasformkavität eingespannt werden.

7. Verfahren nach wenigstens einem der vorstehenden Ansprüche, **dadurch gekennzeichnet, dass** Blasluft in den Formling (11) durch mindestens eine Öffnung (12) eingebracht wird, während zumindest eine weitere der Öffnungen (12) abgedichtet sind, wobei vorzugsweise Blasluft in den Formling (11) durch mehr als eine Öffnung (12) eingebracht wird.

8. Verfahren nach wenigstens einem der vorstehenden Ansprüche, **dadurch gekennzeichnet, dass** das Einbringen der Blasluft in den Formling (11) durch mehr als eine Öffnung (12) in einer zeitlichen Abfolge erfolgt, insbesondere Blasluft durch eine erste Öffnung eingebracht wird und zeitlich versetzt die Blasluft sukzessive in weitere Öffnungen (12) eingebracht wird.

9. Verfahren nach wenigstens einem der vorstehenden Ansprüche, **dadurch gekennzeichnet, dass** die Funktionsabschnitte (11) nach dem Spritzgießen erhalten bleiben, insbesondere nicht durch das Blasformen weiter umgeformt werden.

10. Verfahren nach wenigstens einem der vorstehenden Ansprüche, **dadurch gekennzeichnet, dass** die Enden, insbesondere die Funktionsabschnitte (11) an den Enden, nach dem Blasformen erhalten bleiben.

11. Verfahren nach wenigstens einem der vorstehenden Ansprüche, **dadurch gekennzeichnet, dass** mit dem Spritzgussverfahren weitere Funktionsabschnitt an dem Formling angeformt werden, wobei vorzugsweise die weiteren Funktionsabschnitte im Bereich des hohlen Abschnitts (13) zwischen den Enden angeformt werden.

12. Verfahren nach wenigstens einem der vorstehenden Ansprüche, **dadurch gekennzeichnet, dass** der Formling beim Wechsel vom Spritzgussverfahren zum Blasformverfahren im Bereich der weiteren Funktionsabschnitte gehalten wird.

13. Verfahren nach wenigstens einem der vorstehenden Ansprüche, **dadurch gekennzeichnet, dass** zur Herstellung des Hohlkörpers (10) wenigstens eine Kavität verwendet wird, in der der Formling spritzgegossen und/oder blasgeformt wird, wobei vorzugsweise der Formling relativ zu den Kavitäten bewegt wird oder die Kavitäten relativ zum Formling.

14. Vorrichtung zur Durchführung eines Verfahrens zur Herstellung eines Hohlkörpers (10) nach wenigstens einem der vorstehenden Ansprüche 1 bis 13.

15. Vorrichtung nach Anspruch 14, **dadurch gekennzeichnet, dass** die Vorrichtung wenigstens eine Kavität zum Spritzguss und/oder Blasformen aufweist, wobei in der Kavität zum Blasformen ein Hohlkörper (10) mit zumindest zwei Öffnungen (12) blasformbar ist.
